# EUROPÄISCHE PATENTANMELDUNG

(11) **EP 4 660 550 A1**
(43) Veröffentlichungstag der Anmeldung: **10.12.2025**
(21) Anmeldenummer: 24180943.3
(22) Anmeldetag: 07.06.2024
(51) Int. Cl.: F24F 13/02, F16L 55/033, F24F 13/24

(54) **SCHALLDÄMPFER FÜR LÜFTUNGS- UND/ODER KLIMAANLAGE UND VERFAHREN ZUR SCHALLDÄMPFUNG**

(71) Anmelder: Viessmann Holding International GmbH, 35108 Allendorf (Eder) (DE)
(72) Erfinder: ROHN, Max, 45481 Mülheim an der Ruhr (DE); HECKER, Sebastian, 6210 Sursee (CH); HANZ, Thomas, 56477 Rennerod (DE)
(74) Vertreter: Clerc, Natalia

(57) **Zusammenfassung**

Ein Schalldämpfer für eine raumlufttechnische Klima- und/oder Lüftungsanlage weist einen Eingang (63), einen Ausgang (68), einen dazwischen angeordneten zentralen Luftkanal (620), einen ersten Schallabsorptions-Mantel (66) und eine erste schalldämmende Aussenhülle (64) auf. Der erste Schallabsorptions-Mantel (66) umgibt den zentralen Luftkanal (620) in einem ersten Abschnitt (60) des Schalldämpfers (6) und die erste Aussenhülle (64) umgibt den ersten Schallabsorptions-Mantel (66). Eine zweite Aussenhülle (65) umgibt den zentralen Luftkanal (620) in einem zweiten Abschnitt (61) des Schalldämpfers (6), wobei der zweite Abschnitt (61) dem ersten Abschnitt (60) in Strömungsrichtung (S) nachgeordnet ist oder der erste Abschnitt (60) dem zweiten Abschnitt (61) in Strömungsrichtung (S) nachgeordnet ist. Die zweite Aussenhülle (65) weist eine geringere Schalldämmung auf als die erste Aussenhülle (64). Der Schalldämpfer (6) lässt sich kompakt ausbilden und er ermöglicht eine Ausbreitung des Schalls in eine Umgebung, in welcher der Schall nicht stört.

## Beschreibung

### TECHNISCHES GEBIET

Die vorliegende Erfindung betrifft einen Schalldämpfer für eine raumlufttechnische Klima- und/oder Lüftungsanlage, eine Einheit einer raumlufttechnischen Klima- und/oder Lüftungsanlage mit einem Schalldämpfer und ein Verfahren zur Schalldämpfung einer raumlufttechnischen Klima- und/oder Lüftungsanlage.

### STAND DER TECHNIK

Innerhalb von raumlufttechnischen Klima- und/oder Lüftungsanlagen treten durch den sich in den Luftleitungen ausbreitenden Luftstrom Geräuschemissionen auf. Ursache des Schalls sind Ventilatoren der Klima- und/oder Lüftungsgeräte sowie die durch die Luftleitungen strömende Luft, die einerseits ein Rauschen erzeugt und andererseits Geräusche von einem Raum eines Gebäudes in einen anderen Raum des Gebäudes zu übertragen.

Zur Reduktion dieser Geräuschemissionen werden deshalb Schalldämpfer in den Luftleitungen eingesetzt.

### DARSTELLUNG DER ERFINDUNG

Es ist eine Aufgabe der Erfindung, einen verbesserten Schalldämpfer für eine raumlufttechnische Klima- und/oder Lüftungsanlage zu schaffen.

Diese Aufgabe lösen ein Schalldämpfer mit den Merkmalen des Patentanspruchs 1 sowie eine Einheit mit den Merkmalen des Patentanspruchs 12 und ein Verfahren mit den Merkmalen des Patentanspruchs 13.

Der erfindungsgemässe Schalldämpfer für eine raumlufttechnische Klima- und/oder Lüftungsanlage weist einen Eingang, einen Ausgang, einen zentralen Luftkanal, einen ersten Schallabsorptions-Mantel und eine erste Aussenhülle auf. Der Luftkanal ist zwischen dem Eingang und dem Ausgang angeordnet und definiert zwischen Eingang und Ausgang eine Strömungsrichtung. Der erste Schallabsorptions-Mantel umgibt den zentralen Luftkanal in einem ersten Abschnitt des Schalldämpfers und die erste Aussenhülle umgibt den ersten Schallabsorptions-Mantel. Die erste Aussenhülle ist schalldämmend. Es ist eine zweite Aussenhülle vorhanden, die den zentralen Luftkanal in einem zweiten Abschnitt des Schalldämpfers umgibt. Die zweite Aussenhülle weist eine geringere Schalldämmung auf als die erste Aussenhülle. Der zweite Abschnitt ist dem ersten Abschnitt in Strömungsrichtung nachgeordnet oder der erste Abschnitt ist dem zweiten Abschnitt in Strömungsrichtung nachgeordnet.

Vorzugsweise befindet sich der erste Abschnitt benachbart zur Schallquelle, insbesondere zum Klima- und Lüftungsgerät der Anlage. Diese Anordnung ist unabhängig davon, ob Luft aus dem Gerät in den Schalldämpfer und einer Luftleitung strömt oder von einer Luftleitung durch den Schalldämpfer in das Gerät geleitet wird. Der zweite Abschnitt befindet sich entsprechend entfernt oder benachbart zum Gerät.

"Schalldämmend" bedeutet, dass die Schallausbreitung unterbrochen oder verringert wird. "Schallabsorbierend" bedeutet, dass der Luftschall absorbiert und in Wärme umgewandelt wird, d.h. er wird gedämpft.

"Einfügungsdämpfung" ist die Abschwächung des Schalls während des Passierens durch ein Übertragungssystem, beispielsweise durch ein Rohr oder ein anders Bauteil.

Der erfindungsgemässe Schalldämpfer weist nicht nur schalldämpfende Eigenschaften auf, sondern auch schalldämmende, wobei er in Strömungsrichtung mindestens zwei Bereiche oder Abschnitte mit unterschiedlichen schalldämmenden Eigenschaften aufweist. Im ersten Abschnitt wird der Schall absorbiert und eine Schallausbreitung in die Umgebung wird möglichst verhindert. Im zweiten Abschnitt wird die Schallausbreitung in die Umgebung ermöglicht, so dass die Schallausbreitung in der Luftleitung der Klima- und/oder Lüftungsanlage reduziert oder sogar minimiert ist.

Der erfindungsgemässe Schalldämpfer ist eine Kombination von Abschnitten mit unterschiedlichen schalldämmenden Eigenschaften. Der Schalldämpfer lässt sich bevorzugt mit einem Abschnitt benachbarter zu einer Schallquelle anordnen als mit einem anderen Abschnitt. Der Schalldämpfer weist vorzugsweise schallabsorbierende wie auch schalldämmende Eigenschaften auf Der Schalldämpfer weist vorzugsweise in Strömungsrichtung unterschiedliche Eigenschaften auf. Vorzugsweise sind mindestens zwei eindeutig voneinander unterscheidbare Bereiche mit unterschiedlichen schalldämmenden Eigenschaften vorhanden. Diese mindestens zwei Bereiche oder Abschnitte können dieselben schallabsorbierenden Eigenschaften aufweisen oder sie können unterschiedliche derartige Eigenschaften besitzen.

Dank dieser mindestens zwei Bereiche bzw. Abschnitte weist der erfindungsgemässe Schalldämpfer eine hohe Einfügungsdämpfung bei einer kurzen Baulänge auf. Der Schalldämpfer weist eine kompakte Bauweise auf und benötigt entsprechend wenig Bauraum.

Vorteilhaft ist, dass sich der Schall in einen Raum des Gebäudes verteilen lässt, in welchem er nicht störend wirkt. Vorzugsweise wird der Schall über den zweiten Abschnitt des Schalldämpfers in denselben Raum geleitet, in welchem auch das schallerzeugende Klima- oder Lüftungsgerät steht. Dieser Raum wird üblicherweise Aufstellraum genannt.

Dank des benachbart zur Schallquelle, insbesondere zum schallerzeugenden Klima- und/oder Lüftungsgerät, angeordneten ersten Schallabsorptions-Mantels lässt sich der Schalldämpfer so konzipieren, dass keine nennenswerte Erhöhung der Schallimmission im Aufstellraum stattfindet. Somit wird der in die anderen Räume geleitete Schall minimiert und im Aufstellraum wird die Schallbelastung trotzdem nicht merklich erhöht. Die Schallimmission in Büroräume und Wohnräume ist somit minimiert.

Vorteilhaft ist ferner, dass der luftdurchströmbare freie Querschnitt des zentralen Luftkanals erhalten bleibt, d.h. sich nicht verengen muss bzw. Schikanen aufnehmen muss. Dadurch ist ein Druckverlust verhindert und die Strömungseigenschaften der Klima- und/oder Lüftungsanlage ist optimiert.

Die unterschiedliche Schalldämmung lässt sich beispielsweise durch Wahl eines geeigneten Materials der ersten und zweiten Aussenhülle erhalten. Insbesondere durch Wahl der Dichte oder Masse des Materials. Je geringer die Dichte bzw. die Masse des Materials ist, umso geringer ist üblicherweise die Schalldämmung. Die erste und zweite Aussenhüllen sind beispielsweise Alu-Flexrohre, vorzugsweise mit unterschiedlichen Wandstärken. Als Material eignet sich beispielsweise auch Aluminiumfolie oder Kunststofffolie oder eine Kombination von Materialien. Beispielsweise ist der erste Abschnitt ein Aluflexrohr und für den zweiten Abschnitt ist eine Aluminiumfolie verwendet. In einigen Ausführungsformen ist in der ersten und/oder in der zweiten Aussenhülle ein Draht eingelassen, um die Stabilität des Schalldämpfers zu gewährleisten oder mindestens zu erhöhen.

Der Schallabsorptions-Mantel ist vorzugsweise ein poröser Absorber, beispielsweise aus Steinwolle, Mineralwolle oder Melaminharzschaum.

Die zweite Aussenhülle ermöglicht somit eine Schallausbreitung nach aussen. Vorzugsweise ermöglicht die Schalldämmung der zweiten Aussenhülle eine Schallausbreitung vom zentralen Luftkanal in eine äussere Umgebung des Schalldämpfers.

Der Schalldämpfer kann unterschiedliche Formen aufweisen. Vorzugsweise ist er rohrförmig. Vorzugsweise ist er ein Rohrschalldämpfer. Vorzugsweise weist sein zentraler Luftkanal einen runden Querschnitt auf. Andere Formen, beispielsweise ein rechteckiger Querschnitt, sind jedoch auch möglich.

Vorzugsweise lässt sich der Schalldämpfer in eine Luftleitung der Klima- und/oder Lüftungsanlage integrieren, wobei er vorzugsweise auswechselbar in der Luftleitung angeordnet ist. Vorzugsweise sind der Eingang und der Ausgang als Anschlussstutzen zum Einbau in die Luftleitung ausgebildet. Der Eingang und der Ausgang lassen sich alternativ oder zusätzlich direkt an ein Klima- und Lüftungsgerät der Anlage anschliessen.

Vorzugsweise grenzt der zweite Abschnitt unmittelbar oder annähernd an den ersten Abschnitt an. Dies verbessert die kompakte Bauweise und ermöglicht eine Schalloptimierung.

Der Schalldämpfer weist vorzugsweise eine innere Wand auf, die den zentralen Luftkanal ausbildet. In einer Ausführungsform ist diese Wand durch das Schall-Absorbermaterial des mindestens einen Schallabsorptions-Mantels gebildet. In anderen Ausführungsformen ist ein entsprechend gebogenes Gitter vorhanden. In weiteren Ausführungsformen ist ein Gitter oder ein Innenrohr mit schalldurchlässigen Wänden vorhanden, das den zentralen Luftkanal ausbildet.

Der zentrale Luftkanal ist mindestens im ersten Abschnitt des Schalldämpfers von einem Schall-Absorbermaterial oder einer Schallabsorbereinheit, d.h. von einem Schallabsorptions-Mantel, umgeben. In einigen Ausführungsformen ist der zentrale Luftkanal im zweiten Abschnitt von keinem Schallabsorptions-Mantel umgeben. Vorzugsweise ist der zentrale Luftkanal im zweiten Abschnitt in diesen Ausführungsformen ausschliesslich von der zweiten Aussenhülle umgeben. In anderen Ausführungsformen ist der zentrale Luftkanal im zweiten Abschnitt jedoch vom Schallabsorptions-Mantel umgeben. Dies maximiert die Schallabsorption, d.h. die Schalldämpfung.

Sind genau zwei Abschnitte vorhanden, so ist eine korrekte Einbaurichtung des Schalldämpfers in die Luftleitung zu beachten. Vorzugsweise ist der Schalldämpfer entsprechend gekennzeichnet. Vorzugsweise ist der Schalldämpfer derart ausgerichtet, dass der erste Abschnitt näher bei der Schallquelle liegt als der zweite Abschnitt. Diese Ausbildung weist den Vorteil auf, dass sie sich sehr kompakt und kurz ausbilden lässt und somit in der Luftleitung wenig Platz benötigt. Vorzugsweise ist der erste Abschnitt länger ausgebildet als der zweite Abschnitt. Der Schalldämpfer lässt sich äusserst kompakt ausbilden.

In einer Ausführungsform ist eine dritte Aussenhülle vorhanden, die den zentralen Luftkanal in einem dritten Abschnitt des Schalldämpfers umgibt. Der zweite Abschnitt ist zwischen dem ersten Abschnitt und dem dritten Abschnitt angeordnet. Die dritte Aussenhülle weist eine grössere Schalldämmung auf als die zweite Aussenhülle. Diese Ausführungsform hat den Vorteil, dass sie aufgrund ihrer längeren Ausbildung eine erhöhte Schallreduktion aufweist, insbesondere wenn der zentrale Luftkanal im dritten Abschnitt von einem Schallabsorptions-Mantel umgeben ist. Ein weiterer Vorteil ist, dass sich der Schalldämpfer richtungsunabhängig in die Luftleitung bzw. in Bezug auf das schallerzeugende Klima- und Lüftungsgerät einbauen lässt, insbesondere dann, wenn die schalldämmende Wirkung der ersten und dritten Aussenhülle gleich oder annähernd gleich ist.

Der Schalldämpfer ist vorzugsweise flexibel, d.h. biegsam und/oder dehnbar, ausgebildet. In anderen Ausführungsformen ist er über einen Abschnitt, insbesondere über den ersten Abschnitt, oder über seine gesamte Länge steif oder sogar starr ausgebildet.

Die erfindungsgemässe Einheit einer raumlufttechnischen Klima- und/oder Lüftungsanlage eines Gebäudes weist ein schallerzeugendes Klima- und/oder Lüftungsgerät, mindestens eine an das Klima- und/oder Lüftungsgerät angeschlossene Luftleitung und den erfindungsgemässen Schalldämpfer auf. Der Schalldämpfer ist in der Luftleitung und benachbart zum Klima- und/oder Lüftungsgerät angeordnet. Die Einheit ist zur Anordnung in einem Raum des Gebäudes ausgebildet, so dass sich Schall, der vom zweiten Abschnitt des Schalldämpfers nach aussen gelangt, in diesem Raum ausbreitet. Dadurch wird die Schallimmission in benachbarte Räume minimiert, insbesondere in Wohn- oder Büroräume.

Der erfindungsgemässe Schalldämpfer lässt sich an beliebigen Stellen der Luftleitung einbauen. Er lässt sich an grundsätzlich allen Anschlüssen der Klima- und/oder Lüftungsgeräte anschliessen. Bevorzugt ist jedoch die Anordnung an Stränge, die in einen Büro- oder Wohnraum münden, beispielsweise in eine Zuluftleitung oder eine Abluftleitung und/oder auf der Druckseite der Geräte, beispielsweise in der Zuluftleitung und der Fortluftleitung. Sie lassen sich jedoch auch in der Aussenluftleitung anordnen. Der Schalldämpfer ist jeweils vorzugsweise mit seinem ersten Abschnitt der Schallquelle zugewandt, der zweite Abschnitt befindet sich auf der der Schallquelle entfernten Seite des Schalldämpfers.

Klima- und/oder Lüftungsgeräte sind beispielsweise ein Gegenstrom-Wärmetauscher mit mindestens einem Ventilator oder Filter.

Das erfindungsgemässe Verfahren zur Schalldämpfung einer raumlufttechnischen Klima- und/oder Lüftungsanlage verwendet mindestens einen Schalldämpfer, vorzugsweise mindestens einen erfindungsgemässen Schalldämpfer. Luft von einem schallerzeugenden Klima- und/oder Lüftungsgerät wird in den Schalldämpfer und in eine Luftleitung geführt oder Luft wird von einer Luftleitung und dem Schalldämpfer in das schallerzeugende Klima- und/oder Lüftungsgerät geführt. In einem dem Klima- und/oder Lüftungsgerät zugewandten ersten Abschnitt oder Bereich des Schalldämpfers wird Schall sowohl absorbiert wie auch gedämmt. In einem dem Klima- und/oder Lüftungsgerät abgewandten zweiten Bereich des Schalldämpfers wird der Schall weniger gedämmt als im ersten Bereich, so dass er in diesem Bereich durch eine Hülle des Schalldämpfers in eine äussere Umgebung des Schalldämpfers gelangen kann. Dadurch lässt sich der Schall gezielt in einen Raum oder eine Umgebung leiten, in welchem er nicht stört. Ferner lässt sich gezielt so viel Schall in den Raum oder die Umgebung leiten, dass er dort nicht stört. Die Schalldämmung erfolgt vorzugsweise über die Hülle an die Umgebung. Vorzugsweise erfolgt die Ausrichtung des Schalldämpfers basierend auf der Lage des Klima- und/oder Lüftungsgeräts, wobei der erste Abschnitt unabhängig von der Strömungsrichtung der Luft dem Gerät benachbarter angeordnet ist als der zweite Abschnitt des Schalldämpfers.

Vorzugsweise ist der Schalldämpfer derart konzipiert, dass er Strömungsrauschen, d.h. in der Luftleitung erzeugter Schall im Wesentlichen absorbiert und vom schallerzeugenden Klima- und/oder Lüftungsgerät erzeugter Schall im Wesentlichen in die Umgebung ausbreiten lässt.

Vorzugsweise ist der Schalldämpfer im gleichen Raum eines Gebäudes wie das schallerzeugende Klima- und/oder Lüftungsgerät angeordnet. Er ist vorzugsweise möglichst gerätenah angeordnet.

Je nach Ausführungsform weisen die schalldämmenden Hüllen auch schalldämpfende Eigenschaften auf und/oder die Schallabsorptions-Mäntel weisen auch schalldämmende Eigenschaften auf. Die Eigenschaften sind jedoch derart, dass im zweiten Abschnitt eine Schallausbreitung über dem Umfang ermöglicht ist, wobei sie grösser ist als im ersten Abschnitt. Zudem ist die schalldämmende Wirkung der Schallabsorptions-Mäntel vorzugsweise wesentlich geringer als ihre schallabsorbierende Wirkung und vorzugsweise geringer als die schalldämmende Wirkung der schalldämmenden Hüllen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine beispielhafte Darstellung eines Klima- und/oder Lüftungsgeräts einer raumlufttechnischen Klima- und/oder Lüftungsanlage mit einem erfindungsgemässen Schalldämpfer;
- Figur 2: eine perspektivische schematische Darstellung eines erfindungsgemässen Schalldämpfers gemäss einer ersten Ausführungsform;
- Figur 3: eine Seitenansicht des Schalldämpfers gemäss Figur 2;
- Figur 4: einen Längsschnitt entlang C-C durch den Schalldämpfer gemäss Figur 3;
- Figur 5: einen Querschnitt entlang A-A durch den Schalldämpfer gemäss Figur 3;
- Figur 6: einen Querschnitt entlang B-B durch den Schalldämpfer gemäss Figur 3;
- Figur 7: eine perspektivische schematische Darstellung eines erfindungsgemässen Schalldämpfers gemäss einer zweiten Ausführungsform;
- Figur 8: einen Längsschnitt durch den Schalldämpfer gemäss Figur 7;
- Figur 9: eine perspektivische schematische Darstellung eines erfindungsgemässen Schalldämpfers gemäss einer dritten Ausführungsform und
- Figur 10: einen Längsschnitt durch den Schalldämpfer gemäss Figur 9.

Gleiche oder ähnliche Teile sind mit denselben Bezugszeichen versehen.

### BESCHREIBUNG BEVORZUGTER AUSFÜHRUNGSFORMEN

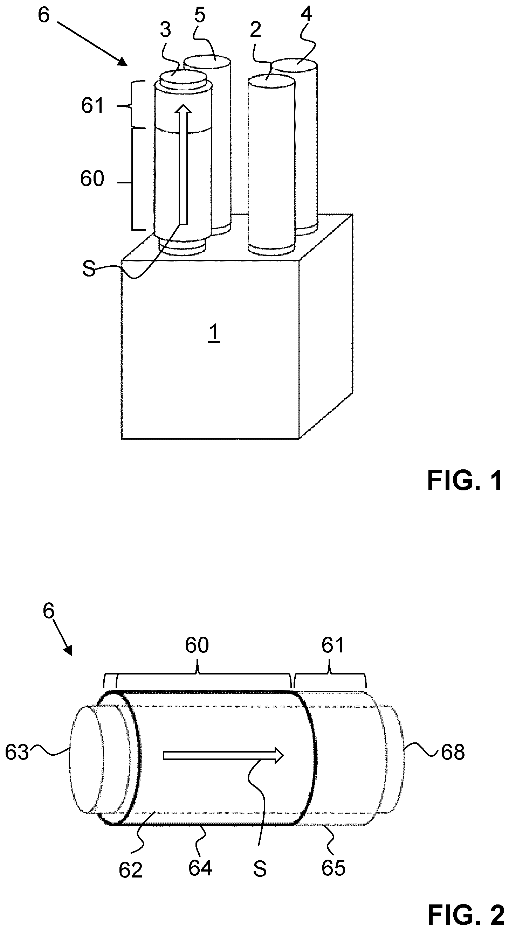

In Figur 1 ist stellvertretend für andere Klima- und/oder Lüftungsgeräte ein Gegenstrom-Wärmetauscher 1 dargestellt. Derartige Wärmetauscher sind im Stand der Technik bekannt. Sie weisen einen Anschluss für eine Aussenluftleitung 2 auf, die Aussenluft von aussen durch eine Gebäudewand und durch den Wärmetauscher 1 in eine Zuluftleitung 3 führt. Die Zuluftleitung 3 leitet die so von aussen angesaugte Luft in einen Innenraum eines Gebäudes, vorzugsweise in einen Büro- oder Wohnraum. Eine Abluftleitung 4 führt vom Innenraum durch eine Gebäudewand Wand und durch den Wärmetauscher 1 in eine Fortluftleitung 5, um vom Innenraum angesaugte Luft nach aussen zu führen.

Aufgrund des mindestens einen Ventilators im Innern des Wärmetauschers 1 entsteht Schall, der sich durch die Leitungen 2, 3, 4, 5 ausbreitet und durch das Gehäuse des Wärmetauschers auch in den Aufstellraum gelangt, in welchem der Wärmetauscher 1 angeordnet ist.

In der Figur 1 dargestellt ist eine Anordnung in einem Schalllabor. Üblicherweise führen die Leitungen 2, 3, 4, 5 nicht alle durch dieselbe Wand, entgegen der hier gezeigten Anordnung.

Wie in Figur 1 erkennbar ist, ist in der Zuluftleitung 3 ein Schalldämpfer 6 angeordnet. Er ist benachbart zum Anschluss der Zuluftleitung 3 an den Wärmetauscher 1 dazwischengeschaltet. Er ist vorzugsweise rohrförmig ausgebildet. Vorzugsweise ist er flexibel und in seiner Längsrichtung streck- und stauchbar, um sich dem Verlauf der Zuluftleitung 3 anzupassen. Die Strömungsrichtung der Luft durch die Zuluftleitung 3 und somit durch den Schalldämpfer ist in Figur 1 mit einem Pfeil dargestellt und mit dem Bezugszeichen S versehen.

Der Schalldämpfer 6 weist zwei Bereiche bzw. Abschnitte auf. Ein erster Abschnitt weist das Bezugszeichen 60 auf, ein in Strömungsrichtung S nachfolgender zweiter Abschnitt weist das Bezugszeichen 61 auf. Vorzugsweise grenzt der zweite Abschnitt 61 unmittelbar an den ersten Abschnitt 60 an.

Gleich aufgebaute Schalldämpfer 6 können zusätzlich oder alternativ auch in einer der anderen Leitungen 3, 4, 5 angeordnet sein. Vorzugsweise sind auch sie in benachbart zum Wärmetauscher 1, genauer zu den entsprechenden Anschlüssen des Wärmetauschers 1, angeordnet. Die Anordnung ist vorzugsweise unabhängig von der Strömungsrichtung, sondern sie ist durch die Ausrichtung in Bezug zur Schallquelle, d.h. hier dem schallerzeugenden Wärmetauscher 1, bedingt. Der erste Abschnitt 60 ist vorzugsweise benachbart zur Schallquelle, der zweite Abschnitt ist entfernter angeordnet. Im Beispiel gemäss Figur 1 wären somit Schalldämpfer für die weiteren Leitungen 3, 4, 5 gleich ausgerichtet wie der zur Leitung 3 gehörende und dargestellte Schalldämpfer 6.

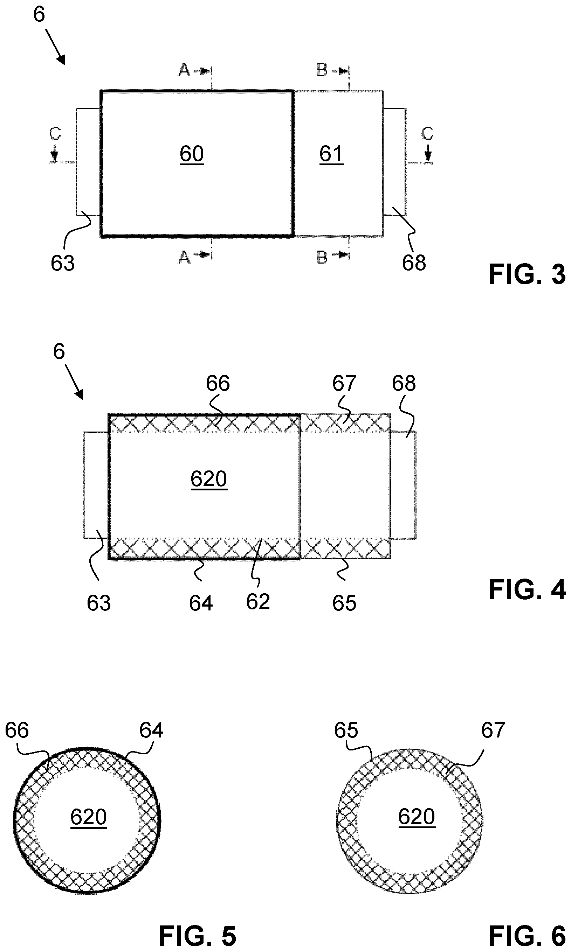

In den Figuren 2 bis 6 ist ein erstes Ausführungsbeispiel eines derartigen Schalldämpfers 6 schematisch dargestellt. Er weist einen Eingang 63 und einen Ausgang 68 auf, die vorzugsweise als Anschlussstutzen ausgebildet sind zur Verbindung mit den Rohren oder Kanälen der Luftleitung. Zwischen ihnen ist ein zentraler Luftkanal 620 mit einer umlaufenden inneren Wand 62 ausgebildet. Der zentrale Luftkanal 620 ist luftdurchströmt und bildet das Verbindungsglied zwischen den Luftleitungsabschnitten. Der Eingang 63 und der Ausgang 68 definieren die Strömungsrichtung S.

Strömungsaufwärts ist der erste Abschnitt 60 ausgebildet, strömungsabwärts der zweite Abschnitt 61. Sie grenzen auch in diesem Beispiel vorzugsweise aneinander.

Der zentrale Luftkanal 620 ist durch ein Innenrohr oder durch ein Gitter, durch einen Schallabsorptions-Mantel oder durch eine andere stützende Vorrichtung, der bzw. die den zentralen Luftkanal 620 umgibt, gebildet. Im dargestellten Beispiel erstreckt sich ein Schallabsorptions-Mantel 66, 67, der vorzugsweise eine Stützstruktur aufweist, über die gesamte Länge des ersten Abschnitts 60 und auch über die gesamte Länge des zweiten Abschnitts 61.

Ist die innere Wand 62 des Luftkanals 620 durch ein Innenrohr, ein Gitter oder eine andere Struktur gebildet, so ist er mindestens im ersten Abschnitt 60 des Schalldämpfers von einem ersten Schallabsorptions-Mantel 66 umgeben. In diesem Beispiel ist der zentrale Luftkanal 620 in einem zweiten Abschnitt 61 des Schalldämpfers von einem zweiten Schallabsorptions-Mantel 67 umgeben. Der erste und zweite Schallabsorptions-Mantel 66, 67 sind je nach Ausführungsform gemeinsam einteilig ausgebildet oder voneinander getrennte Bauteile. Sie weisen je nach Ausführungsform dieselbe schallabsorbierende Wirkung auf oder sich voneinander unterscheidende schallabsorbierende Wirkungen. Der erste und zweite Schallabsorptions-Mantel 66,67, d.h. der poröse Absorber, ist vorzugsweise aus einer gewickelten Matte aus Steinwolle, Mineralwolle oder Melaminharzschaumgefertigt.

Der erste Schallabsorptions-Mantel 66 ist von einer ersten Aussenhülle 64 umgeben. Sie weist eine schalldämmende Wirkung auf. Das Schalldämm-Mass R ist vorzugsweise grösser als 25 dB. Das Schalldämm-Mass R ergibt sich aus der inneren Schallleistung minus der äusseren Schallleistung. Vorzugsweise ist die erste Aussenhülle 64 aus einem Alu-Flexrohr, aus einer Aluminiumfolie, aus einer Kunststofffolie oder einem Gewebe gefertigt. In einigen Ausführungsformen ist ein Draht oder ein stützendes Gewebe in die erste Aussenhülle 64 eingearbeitet.

Der zweite Schallabsorptions-Mantel 67 ist von einer zweiten Aussenhülle 65 umgeben. Sie weist eine schalldämmende Wirkung auf, die geringer ist als die schalldämmende Wirkung der ersten Aussenhülle 64. Vorzugsweise ist sie mehr als 10 dB geringer als diejenige der ersten Aussenhülle 64. Ihr Schalldämm-Mass R ist vorzugsweise kleiner als 15 dB. Vorzugsweise ist die zweite Aussenhülle 64 aus einem Aluflexrohr, aus einer Aluminiumfolie, einer Kunststofffolie oder eine Gewebe gefertigt. In einigen Ausführungsformen ist ein Draht oder ein stützendes Gewebe in die zweite Aussenhülle 65 eingearbeitet. Ist sie aus demselben Material wie die erste Aussenhülle 64 gefertigt, so ist ihre Wandstärke vorzugsweise geringer gewählt oder sie weist Schalldurchlassöffnungen auf.

Schall, der vom Wärmetauscher 1 durch die Zuluftleitung 3 in den Schalldämpfer 6 gelangt bzw. in der Zuluftleitung 3 entsteht, wird im ersten Abschnitt 60 teilweise gedämpft, d.h. absorbiert, und in den zweiten Abschnitt 61 weitergeleitet. Vorzugsweise weist der erste Abschnitt 60 eine derart hohe Schalldämmung auf, dass kaum Schall über seinen Umfang nach aussen gelangen kann. Schall, der in die Umgebung gelangt, sollte das Gesamtgeräusch im Raum nicht wesentlich erhöhen. Vorzugsweise sollte der über den Umfang nach aussen gelangende Schall sollte unter 6 dB des Gerätegeräusch sein. Im zweiten Abschnitt 61 wird der Schall weiterhin teilweise absorbiert, wobei er nun teilweise über dem Umfang des zweiten Abschnitts 61 nach aussen gelangen kann.

Ist die Einheit, gebildet durch ein schallerzeugendes Gerät, beispielsweise ein Wärmetauscher 1, Zuluftleitung 3 und Schalldämpfer 6 im gleichen Raum angeordnet, so gelangt der über den Umfang des Schalldämpfers 6 sich ausbreitende Schall in diesen Raum. In diesem Raum ist ohnehin der mindestens eine Ventilator des Wärmetauschers 1 hörbar. Ist die durch den Schalldämpfer 6 verursachte Schallimmission in diesen Raum lediglich ein geringer Prozentsatz im Vergleich zur Schallimmission durch den Wärmetauscher 1, wirkt dieser zusätzliche Schall nicht störend. Er entlastet jedoch die angrenzenden Wohn- und Büroräume, in denen Lärm wesentlich sensitiver wahrgenommen wird.

Vorzugsweise wird die Geräuschemission des Geräts 1 sowie die Schallemission des Schalldämpfers bestimmt und der Schalldämpfer wird entsprechend konzipiert, damit sich die Gesamtschallleistung im Aufstellraum nicht oder nur unbedeutend erhöht. Eine Erhöhung von ca. 2 dB wirkt sich nicht störend aus.

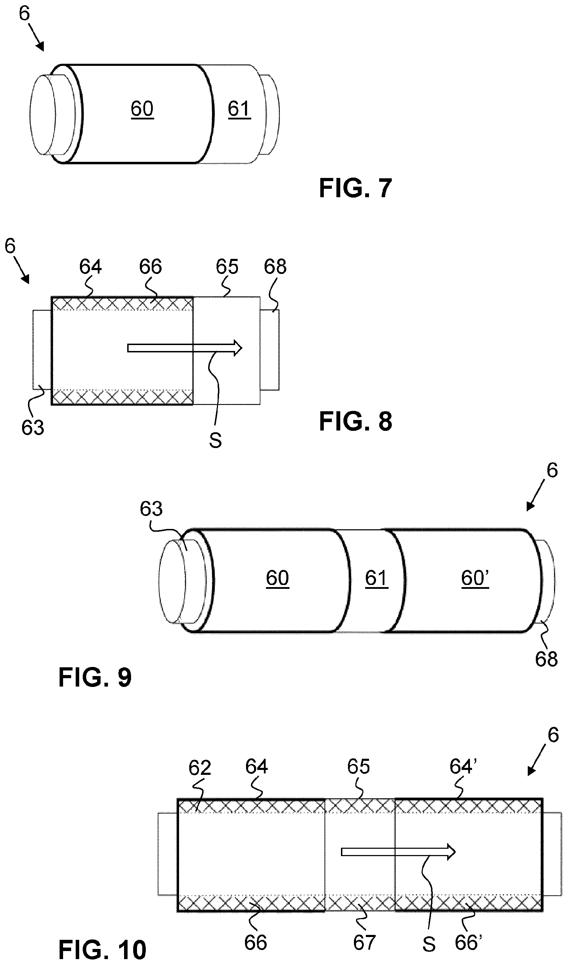

In den Figuren 7 und 8 ist ein zweites Ausführungsbeispiel des erfindungsgemässen Schalldämpfers 6 dargestellt. Er ist gleich ausgebildet wie das Ausführungsbeispiel gemäss den Figuren 2 bis 6 bis auf den Unterschied, dass der zweite Abschnitt 61 keinen zweiten Schallabsorptions-Mantel aufweist.

In den Figuren 9 und 10 ist ein drittes Ausführungsbeispiel des erfindungsgemässen Schalldämpfers 6 dargestellt. Er ist im Wesentlichen gleich ausgebildet wie das Ausführungsbeispiel gemäss den Figuren 2 bis 6. Er weist jedoch einen dritten Abschnitt 60' auf, der in Strömungsrichtung S dem zweiten Abschnitt 61 nachfolgend, vorzugsweise unmittelbar anschliessend, angeordnet ist.

Der dritte Abschnitt 60' weist eine schalldämmenden Aussenhülle 64' auf. Sie weist vorzugsweise dieselben schalldämmenden Eigenschaften auf wie die erste Aussenhülle 64. Vorzugsweise sind auch die schalldämpfenden Eigenschaften eines dritten Schallabsorptions-Mantels 66', der den zentralen Luftkanal 620 im dritten Abschnitt 60' umgibt, dieselben wie diejenigen des ersten Schallabsorptions-Mantels 66. Somit lässt sich der Schalldämpfer 6 auch in umgekehrter Richtung verwenden.

In diesem Beispiel ist der zentrale Luftkanal 620 wiederum im zweiten Abschnitt 61 des Schalldämpfers von einem zweiten Schallabsorptions-Mantel 67 umgeben. Er kann jedoch auch keinen derartigen Mantel aufweisen und beispielsweise wie im zweiten Ausführungsbeispiel ausgebildet sein.

Wie in den Figuren der drei Ausführungsbeispiele erkennbar ist, ist der zweite Abschnitt 61 jeweils kürzer ausgebildet als der erste bzw. dritte Abschnitt 60, 60'. Dies ist bevorzugt. Er kann jedoch auch gleich lang oder länger ausgebildet sein.

Vorzugsweise weist der zentrale Luftkanal 620 in allen Abschnitte 60, 60', 61 denselben Innendurchmesser auf. Vorzugsweise ist er auch innerhalb der jeweiligen Abschnitte 60, 60', 61 gleichbleibend. Der Aussendurchmesser der Abschnitte 60, 60', 61 ist ebenfalls vorzugsweise gleich gross und über die Länge gleichbleibend. Je nach Art und Form der jeweiligen Schallabsorptions-Mäntel 66, 66', 67 kann er jedoch auch unterschiedlich gross sein.

Die schalldämmenden Hüllen 64, 64', 65 bilden vorzugsweise die äussere Oberfläche des Schalldämpfers 6.

Der erfindungsgemässe Schalldämpfer lässt sich kompakt ausbilden und er ermöglicht über die Oberfläche des zweiten Mantels eine Weiterleitung des Schalls in eine Umgebung, in welcher der Schall nicht stört.

### BEZUGSZEICHENLISTE

- 1: Klima- und/oder Lüftungsgerät
- 2: Aussenluftleitung
- 3: Zuluftleitung
- 4: Abluftleitung
- 5: Fortluftleitung
- 6: Schalldämpfer
- 60: erster Abschnitt
- 60': dritter Abschnitt
- 61: zweiter Abschnitt
- 62: innere Wand
- 620: zentraler Luftkanal
- 63: Eingang
- 64: erste Aussenhülle
- 64': dritte Aussenhülle
- 65: zweite Aussenhülle
- 66: erster Schallabsorptions-Mantel
- 66': dritter Schallabsorptions-Mantel
- 67: zweiter Schallabsorptions-Mantel
- 68: Ausgang
- S: Strömungsrichtung

## Patentansprüche

1. Schalldämpfer für eine raumlufttechnische Klima- und/oder Lüftungsanlage, wobei der Schalldämpfer (6) aufweist
einen Eingang (63),
einen Ausgang (68),
einen zentralen Luftkanal (620), der zwischen dem Eingang (63) und dem Ausgang (68) angeordnet ist und der zwischen Eingang (63) und Ausgang (68) eine Strömungsrichtung (S) definiert,
ein erster Schallabsorptions-Mantel (66), der den zentralen Luftkanal (620) in einem ersten Abschnitt (60) des Schalldämpfers (6) umgibt und
eine erste Aussenhülle (64), welche den ersten Schallabsorptions-Mantel (66) umgibt und schalldämmend ist,
**dadurch gekennzeichnet,**
**dass** eine zweite Aussenhülle (65) vorhanden ist, die den zentralen Luftkanal (620) in einem zweiten Abschnitt (61) des Schalldämpfers (6) umgibt, und
**dass** die zweite Aussenhülle (65) eine geringere Schalldämmung aufweist als die erste Aussenhülle (64),
wobei der zweite Abschnitt (61) dem ersten Abschnitt (60) in Strömungsrichtung (S) nachgeordnet ist oder
wobei der erste Abschnitt (60) dem zweiten Abschnitt (61) in Strömungsrichtung (S) nachgeordnet ist.

2. Schalldämpfer nach Anspruch 1, wobei die Schalldämmung der zweiten Aussenhülle (65) eine Schallausbreitung vom zentralen Luftkanal (620) in eine äussere Umgebung des Schalldämpfers (6) ermöglicht.

3. Schalldämpfer nach einem der Ansprüche 1 oder 2, wobei der Schalldämpfer (6) rohrförmig ist.

4. Schalldämpfer nach einem der Ansprüche 1 bis 3, wobei der Eingang (63) und der Ausgang (68) als Anschlussstutzen zum Einbau in eine Luftleitung (3, 4, 5, 6) oder zur Verbindung mit einem schallerzeugenden Klima- und/oder Lüftungsgerät ausgebildet sind.

5. Schalldämpfer nach einem der Ansprüche 1 bis 4, wobei der zweite Abschnitt (61) unmittelbar an den ersten Abschnitt (60) angrenzt.

6. Schalldämpfer nach einem der Ansprüche 1 bis 5, wobei ein Gitter oder ein Innenrohr vorhanden ist, das den zentralen Luftkanal (620) ausbildet.

7. Schalldämpfer nach einem der Ansprüche 1 bis 6, wobei im zweiten Abschnitt (61) kein Schallabsorptions-Mantel vorhanden ist.

8. Schalldämpfer nach einem der Ansprüche 1 bis 7, wobei der zentrale Luftkanal (620) im zweiten Abschnitt (61) ausschliesslich von der zweiten Aussenhülle (65) umgeben ist.

9. Schalldämpfer nach einem der Ansprüche 1 bis 6, wobei der zentrale Luftkanal (620) im zweiten Abschnitt (61) von einem zweiten Schallabsorptions-Mantel (67) umgeben ist.

10. Schalldämpfer nach einem der Ansprüche 1 bis 9, wobei eine dritte Aussenhülle (64') vorhanden ist, die den zentralen Luftkanal (620) in einem dritten Abschnitt (60') des Schalldämpfers (6) umgibt, wobei der zweite Abschnitt (61) zwischen dem ersten Abschnitt (60) und dem dritten Abschnitt (60") angeordnet ist, und wobei die dritte Aussenhülle (64') eine grössere Schalldämmung aufweist als die zweite Aussenhülle (65).

11. Schalldämpfer nach Anspruch 10, wobei die dritte Aussenhülle (64') dieselbe Schalldämmung aufweist wie die erste Aussenhülle (64).

12. Einheit einer raumlufttechnischen Klima- und/oder Lüftungsanlage eines Gebäudes, wobei die Einheit aufweist
ein schallerzeugendes Klima- und/oder Lüftungsgerät (1),
mindestens eine an das Klima- und/oder Lüftungsgerät angeschlossene Luftleitung (2, 3, 4, 5) und
den Schalldämpfer (6) gemäss einem der Ansprüche 1 bis 11,
wobei der Schalldämpfer (6) in der Luftleitung (3) und benachbart zum Klima- und/oder Lüftungsgerät (1) angeordnet ist und
wobei die Einheit zur Anordnung in einem Raum des Gebäudes ausgebildet ist, so dass Schall, der vom zweiten Abschnitt (61) des Schalldämpfers (6) nach aussen gelangt, sich in diesem Raum ausbreitet.

13. Verfahren zur Schalldämpfung einer raumlufttechnischen Klima- und/oder Lüftungsanlage unter Verwendung mindestens eines Schalldämpfers, vorzugsweise mittels mindestens eines Schalldämpfers (6) gemäss einem der Ansprüche 1 bis 11,
wobei Luft von einem schallerzeugenden Klima- und/oder Lüftungsgerät (1) in den Schalldämpfer (6) und eine mit dem Schalldämpfer (6) verbundene Luftleitung (3) geführt wird oder wobei Luft von einer Luftleitung (3) und dem Schalldämpfer (6) in das schallerzeugende Klima- und/oder Lüftungsgeräts (1) geführt wird,
wobei in einem dem schallerzeugenden Klima- und/oder Lüftungsgerät (1) zugewandten ersten Abschnitt (60) des Schalldämpfers (6) Schall absorbiert und gedämmt wird und in einem dem Klima- und/oder Lüftungsgerät (1) abgewandten zweiten Abschnitt (61) des Schalldämpfers (6) der Schall weniger gedämmt wird, so dass er in diesem Bereich in eine äussere Umgebung des Schalldämpfers (6) gelangen kann.

14. Verfahren nach Anspruch 13, wobei der Schalldämpfer (6) derart konzipiert ist, dass er in der Luftleitung (3) erzeugter Schall im Wesentlichen absorbiert und vom schallerzeugenden Klima- und/oder Lüftungsgerät (1) erzeugter Schall im Wesentlichen in die Umgebung ausbreiten lässt.

15. Verfahren nach einem der Ansprüche 13 oder 14, wobei der Schalldämpfer (6) im gleichen Raum eines Gebäudes wie das schallerzeugende Klima- und/oder Lüftungsgerät (1) angeordnet ist.
